# EUROPÄISCHE PATENTSCHRIFT

(11) **EP 2 196 359 B1**
(45) Veröffentlichungstag und Bekanntmachung des Hinweises auf die Patenterteilung: **07.09.2016**
(21) Anmeldenummer: 09178879.4
(22) Anmeldetag: 11.12.2009
(51) Int. Cl.: B60R 16/02, G06F 3/048

(54) **Bedienverfahren und Bedieneinrichtung**
Control method and device
Procédé de fonctionnement et dispositif de fonctionnement

(30) Priorität: 12.12.2008 DE 102008061987
(43) Veröffentlichungstag der Anmeldung: 16.06.2010
(73) Patentinhaber: Volkswagen Aktiengesellschaft, 38440 Wolfsburg (DE)
(72) Erfinder: Henze, Stefan, 38104, Braunschweig (DE); Bendewald, Lennart, 38442, Wolfsburg (DE); Wäller, Christoph, 38102, Braunschweig (DE); Michel, Simon, 28844, Weyhe, Erichshof (DE); Moritz, Denny, 28199, Bremen (DE); Fröhlich, Marion, 27308, Kirchlinteln (DE); Gramsch, Steffen, 28307, Bremen (DE); Von Maydell, Peter, 14163, Berlin (DE)
(74) Vertreter: Reitstötter Kinzebach

(56) Entgegenhaltungen:
- EP-A1- 0 961 199
- DE-A1- 10 352 032
- US-A1- 2008 122 799
- US-A1- 2008 211 779

## Beschreibung

Die vorliegende Erfindung betrifft ein Verfahren zum Bedienen einer Einrichtung, der ein Einstellparameter zugeordnet ist. Ferner betrifft die Erfindung eine Vorrichtung zum Bedienen einer solchen Einrichtung mit einer Anzeigevorrichtung mit einer Anzeigefläche zum Anzeigen einer Schaltfläche zum Verändern des Einstellparameters der Einrichtung und einer Steuervorrichtung, die mit der Anzeigevorrichtung gekoppelt ist und die eine Schnittstelle zu der zu bedienenden Einrichtung aufweist. Schließlich betrifft die Erfindung eine Vorrichtung zum Bedienen einer Fahrzeugeinrichtung, die eine solche Bedienvorrichtung umfasst.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombiinstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Aus der EP 0 961 199 ist ein Verfahren zum Bedienen einer Einrichtung, der ein Einstellparameter zugeordnet ist, bei dem auf einer Anzeigefläche eine Schaltfläche zum Verändern des Einstellparameters angezeigt wird und der Einstellparameter durch eine auf der Anzeigefläche ausgeführte Wischgeste verändert wird, wobei die Wischgeste nacheinander sowohl in einem von der Schaltfläche eingenommenen Bereich als auch in einem Bereich außerhalb des von der Schaltfläche eingenommenen Bereichs ausgeführt wird, bekannt.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z. B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

Des Weiteren ist aus der EP 0 366 132 B1 eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung und ggf. die Bewegung während der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Um einen Einstellparameter einer Fahrzeugeinrichtung zu verändern, ist es bekannt, Schaltflächen zum Erhöhen und zum Erniedrigen des Einstellparameters anzuzeigen. Tippt der Nutzer eine dieser Schaltflächen an, wird der Einstellparameter um einen bestimmten Wert erhöht bzw. erniedrigt. Berührt der Nutzer eine Schaltfläche für eine bestimmte Dauer, kann der Einstellparameter um einen Wertebereich erhöht bzw. erniedrigt werden, der von der Dauer der Berührung der Schaltfläche abhängt. Dabei erfolgt die Veränderung des Einstellparameters vielfach nicht linear.

Für die Bedienung der vielfältigen Einrichtungen eines Fahrzeugs ergeben sich sehr spezielle Anforderungen, da die Bedienung unter anderem durch den Fahrer erfolgen kann. Es ist daher sehr wichtig, dass der Bedienvorgang nicht zu einer Ablenkung des Fahrers während der Fahrt führt. Der Bedienvorgang sollte daher insbesondere so wenig Aufmerksamkeit vom Fahrer erfordern wie möglich und außerdem schnell durchführbar sein.

Gleichermaßen ergeben sich bei mobilen Geräten, beispielsweise aus der Unterhaltungselektronik, spezielle Erfordernisse. Falls diese Geräte zur Bedienung mit einem Touchscreen ausgestattet sind, ist die Anzeige bzw. Bedienfläche sehr begrenzt. Wenn der Nutzer den Touchscreen mit seiner Fingerspitze bedient, ergibt sich das Problem, dass ein im Verhältnis zur gesamten Anzeigefläche relativ großer Bereich des Touchscreens bei der Bedienung berührt wird. Falls auf der Anzeigefläche viele verschiedene Schaltflächen dargestellt werden sollen, ergibt sich das Problem, die Berührung des Touchscreens bei der Bedienung einer bestimmten Schaltfläche zuzuordnen.

Es ist die Aufgabe der vorliegenden Erfindung, ein Verfahren und eine Vorrichtung der eingangs genannten Art bereitzustellen, mit denen ein Nutzer einen Einstellparameter einer Einrichtung ändern kann, wobei der hierfür erforderliche Bedienvorgang so schnell wie möglich durchführbar sein soll und vom Nutzer ein möglichst geringes Maß an Aufmerksamkeit abverlangen soll.

Erfindungsgemäß wird diese Aufgabe durch ein Verfahren mit den Merkmalen des Anspruchs 1, eine Vorrichtung mit den Merkmalen des Anspruchs 9 bzw. eine Vorrichtung mit den Merkmalen des Anspruchs 12 gelöst. Vorteilhafte Aus- und Weiterbildungen ergeben sich aus den abhängigen Ansprüchen.

Bei dem erfindungsgemäßen Verfahren wird auf einer Anzeigefläche eine Schaltfläche zum Verändern des Einstellparameters angezeigt und der Einstellparameter wird durch eine auf oder vor der Anzeigefläche ausgeführte Wischgeste verändert, wobei die Wischgeste zunächst in oder vor einem Bereich außerhalb des von der Schaltfläche eingenommenen Bereichs, danach in oder vor einem von der Schaltfläche eingenommenen Bereich und schließlich in oder vor einem Bereich außerhalb des von der Schaltfläche eingenommenen Bereichs berührt wird. Bei dem erfindungsgemäßen Verfahren muss somit ein Nutzer insbesondere nicht mehr die Anzeigefläche genau bei der Schaltfläche berühren, um den Einstellparameter zu verändern. Vielmehr kann der Nutzer bei dem erfindungsgemäßen Verfahren eine Wischgeste ausführen, die in Bereichen ausgeführt wird, die sowohl von der Schaltfläche eingenommen werden bzw. vor der Schaltfläche liegen als auch außerhalb von diesen Bereichen liegen.

Unter einer Wischgeste wird im Sinne der Erfindung eine Bewegung eines Objekts, wie z. B. einer Stiftspitze oder der Fingerspitze eines Nutzers verstanden, die in einem Erfassungsbereich bei einer bestimmten Position beginnt, auf einer Linie in dem Erfassungsbereich geführt wird und schließlich bei einer bestimmten Position in dem Erfassungsbereich endet. Die Linie hat dabei insbesondere die Form, wie sie üblicherweise bei einer Wischbewegung auftritt. Sie verläuft somit leicht gebogen in eine bestimmte Richtung.

Die Anzeigefläche ist bei einer Ausgestaltung des erfindungsgemäßen Verfahrens berührungsempfindlich. Sie ist somit Teil eines so genannten Touchscreens. In diesem Fall wird bei der Wischgeste die Anzeigefläche nacheinander zunächst in einem Bereich außerhalb des von der Schaltfläche eingenommenen Bereichs, danach in einem von der Schaltfläche eingenommenen Bereich und schließlich in einem Bereich außerhalb des von der Schaltfläche eingenommenen Bereichs berührt. Durch die Wischgeste wird somit in diesem Fall die Schaltfläche durchgestrichen.

Bei der Wischgeste wird die berührungsempfindliche Anzeigefläche insbesondere fortwährend berührt.

Gemäß einer anderen Ausgestaltung des erfindungsgemäßen Verfahrens wird die Position eines Objekts, insbesondere die Hand oder der Finger bzw. die Fingerspitze eines Nutzers, in einem bestimmten Bereich vor der Anzeigefläche detektiert. Aus der zeitlichen Entwicklung dieser Position lässt sich die Bewegung des Objekts ableiten, so dass bestimmte, vom Nutzer mit der Hand oder dem Finger ausgeführte Gesten, erfasst werden können und in ein entsprechendes Steuersignal umgewandelt werden können.

Wenn bei dem erfindungsgemäßen Verfahren die Position eines Objekts vor der Anzeigefläche detektiert wird, wird die Wischgeste in dem Erfassungsbereich vor und neben der angezeigten Schaltfläche ausgeführt. Der von der Schaltfläche eingenommene Bereich ist in diesem Fall der Raum, der sich senkrecht vor der Schaltfläche befindet. Der restliche Raum des Erfassungsbereichs befindet sich außerhalb des von der Schaltfläche eingenommenen Bereichs.

Gemäß einer Weiterbildung des erfindungsgemäßen Verfahrens hängt die Veränderung der Einstellparameters von der Bewegungsrichtung beim Ausführen der Wischgeste ab. Dem Einstellparameter kann beispielsweise ein numerischer Wert zugeordnet sein. In diesem Fall wird der numerische Wert durch die Wischgeste herauf- oder heruntergesetzt. Der numerische Wert kann dabei insbesondere in der Schaltfläche angezeigt werden.

Gemäß einer Weiterbildung des erfindungsgemäßen Verfahrens hängt die Veränderung der Einstellparameters von der Bewegungsgeschwindigkeit beim Ausführen der Wischgeste ab. Das Maß, um welches der numerische Wert des Einstellparameters verändert wird, kann z. B. von der Bewegungsgeschwindigkeit beim Ausführen der Wischgeste abhängen.

Gemäß einer anderen Ausgestaltung ist dem Einstellparameter ein logischer Wert zugeordnet. In diesem Fall wird der logische Wert durch die Wischgeste verändert. Auch der logische Wert kann in der Schaltfläche angezeigt werden. Der numerische Wert bzw. der logische Wert wird insbesondere bei einer definierten Bewegungsrichtung in eine Richtung verändert und bei einer entgegengesetzten Bewegungsrichtung in die andere Richtung verändert. Gemäß einer Weiterbildung des erfindungsgemäßen Verfahrens werden nicht nur zwei Bewegungsrichtungen zum unterschiedlichen Verändern des Einstellparameters definiert, sondern mehr als zwei Bewegungsrichtungen, insbesondere vier Bewegungsrichtungen.

Die erfindungsgemäße Vorrichtung ist dadurch gekennzeichnet, dass mittels der Steuervorrichtung eine auf oder vor der Anzeigefläche ausgeführte Wischgeste erfassbar ist, wobei die Wischgeste zunächst in oder vor einem Bereich außerhalb des von der Schaltfläche eingenommenen Bereichs, danach in oder vor einem von der Schaltfläche eingenommenen Bereich und schließlich in oder vor einem Bereich außerhalb des von der Schaltfläche eingenommenen Bereichs berührt wird und Daten zum Verändern des Einstellparameters in Abhängigkeit von der erfassten Wischgeste erzeugbar sind.

Die erfindungsgemäße Vorrichtung ist insbesondere so ausgestaltet, dass sie die vorstehend beschriebenen Verfahrensschritte teilweise oder vollständig ausführen kann.

Gemäß einer Ausgestaltung der erfindungsgemäßen Vorrichtung ist die Anzeigefläche berührungsempfindlich. In diesem Fall wird bei der Wischgeste die Anzeigefläche zunächst in einem Bereich außerhalb des von der Schaltfläche eingenommenen Bereichs, danach in einem von der Schaltfläche eingenommenen Bereich und schließlich in einem Bereich außerhalb des von der Schaltfläche eingenommenen Bereichs berührt, wie es vorstehend mit Bezug zu dem erfindungsgemäßen Verfahren erläutert wurde. Mittels der Steuervorrichtung ist insbesondere die Bewegungsrichtung beim Ausführen der Wischgeste erfassbar. In diesem Fall kann die Veränderung des Einstellparameters von der Bewegungsrichtung beim Ausführen der Wischgeste abhängen.

Die Erfindung betrifft ferner eine Vorrichtung zum Bedienen einer Fahrzeugeinrichtung, welche die vorstehend beschriebene Vorrichtung umfasst. Die Anzeigefläche ist in diesem Fall insbesondere im Innenraum des Fahrzeugs angeordnet. Bei der Fahrzeugeinrichtung kann es sich beispielsweise um eine Klimaanlage oder eine Einrichtung zum Wiedergeben von Multimediadaten handeln.

Gemäß einer Weiterbildung der erfindungsgemäßen Vorrichtung weist diese eine Einrichtung zum Erfassen der Position eines Objekts vor der Anzeigefläche auf. Bei dem Objekt kann es sich z. B. um die Hand oder den Finger bzw. die Fingerspitze eines Nutzers handeln. Die Bedienung kann in diesem Fall somit dadurch erfolgen, dass der Nutzer mit seiner Hand oder seinem Finger vor der Anzeigefläche die Wischgeste ausführt.

Bei dem erfindungsgemäßen Verfahren bzw. der erfindungsgemäßen Vorrichtung ist es zum Bedienen der zugeordneten Einrichtung nicht erforderlich, dass der Nutzer eine bestimmte Schaltfläche auf der berührungsempfindlichen Oberfläche der Anzeigefläche genau trifft. Die Wischgeste erlaubt es dem Nutzer, für die Bedienung auch Bereiche außerhalb der Schaltfläche zu berühren. Dies ist insbesondere bei einem Einsatz in einem Fahrzeug von Vorteil, da aus Gründen des begrenzten Bauraums die berührungsempfindliche Anzeigefläche vielfach relativ klein ist. Werden auf der Anzeigefläche gleichzeitig mehrere Schaltflächen angezeigt, ist der für die Schaltfläche zur Verfügung stehende Bereich der Anzeigefläche vielfach relativ klein, so dass ein exaktes Berühren der Schaltfläche ein großes Maß an Aufmerksamkeit vom Nutzer erfordert. Dies ist jedoch insbesondere dann von Nachteil, wenn der Fahrer den Bedienvorgang ausführt. Des Weiteren treten in einem Fahrzeug häufig Vibrationen auf, die ein exaktes Berühren einer angezeigten Schaltfläche erschwert. Eine Wischgeste, die nur bei einem Teil des Bedienvorgangs auf oder vor dem von der Schaltfläche angenommenen Bereich ausgeführt werden muss, kann vom Fahrer des Fahrzeugs auch bei starken Vibrationen schnell und sicher ausgeführt werden.

Die gleichen Vorteile des erfindungsgemäßen Verfahrens und der erfindungsgemäßen Vorrichtung ergeben sich auch bei einem Einsatz in Verbindung mit einem mobilen Gerät, z. B. der Unterhaltungselektronik. Auch in diesem Fall ist die berührungsempfindliche Anzeigefläche vielfach relativ klein und das Gerät wird unter Umständen in Umgebungen eingesetzt, bei denen das Gerät Vibrationen ausgesetzt ist, welche die Bedienung der berührungsempfindlichen Anzeigefläche erschweren.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Vorrichtung und die Kopplung dieser Vorrichtung mit der zu bedienenden Einrichtung,
- die Figur 2 bis 4: zeigen Anzeigen auf der Anzeigefläche, bei welchen Wischgesten veranschaulicht werden, die bei Ausführungsbeispielen des erfindungsgemäßen Verfahrens eingesetzt werden, und
- Figur 5: zeigt schematisch ein weiteres Ausführungsbeispiel der erfindungsgemäßen Vorrichtung und die Kopplung dieser Vorrichtung mit der zu bedienenden Einrichtung.

Eine zu bedienende Einrichtung 1 ist mit einer Steuervorrichtung 2 verbunden. Die Steuervorrichtung 2 weist hierfür eine Schnittstelle 6 auf, mittels derer Daten zum Verändern eines Einstellparameters der Einrichtung 1 an dieselbe übertragen werden können. Die Kopplung der Einrichtung 1 mit der Steuervorrichtung 2 kann über eine direkte Verbindung oder über einen Datenbus erfolgen.

Bei der Einrichtung 1 kann es sich um eine beliebige Einrichtung handeln, der ein Einstellparameter zugeordnet ist, wobei der Einstellparameter über eine Nutzerschnittstelle veränderbar ist. Bei der Einrichtung 1 handelt es sich insbesondere um eine beliebige Einrichtung eines Fahrzeugs, insbesondere um eine Klimaanlage oder einer Einrichtung zum Wiedergeben von Multimediadaten. Der Einstellparameter kann in diesem Fall z. B. die Solltemperatur der Klimaanlage oder verschiedene Audioeinstellungen der Wiedergabeeinrichtung sein, wie z. B. die Einstellung der Lautstärke.

Des Weiteren kann es sich bei der Einrichtung 1 um ein mobiles Gerät handeln, wie z. B. ein Mobiltelephon, einen tragbaren Computer bzw. einen so genannten PDA (Personal Digital Assistant) oder ein tragbares Musikwiedergabegerät, wie z. B. einem so genannten mp3-Spieler.

Die Steuervorrichtung 2 ist ferner mit einer Anzeigevorrichtung 3 verbunden, welche eine Anzeigefläche 4 aufweist. Die Anzeigefläche 4 ist Teil eines Displays beliebiger Bauart. Es kann sich insbesondere um ein freiprogrammierbares Matrix-Display handeln, wie z. B. ein Flüssigkristalldisplay.

Gemäß dem ersten Ausführungsbeispiel ist die Anzeigefläche 4 mit einer berührungsempfindlichen Oberfläche versehen, so dass ein so genannter Touchscreen bereitgestellt wird. Zum Verändern des Einstellparameters der Einrichtung 1 können somit von der Steuervorrichtung 2 Anzeigedaten erzeugt werden, welche zu einer Anzeige auf der Anzeigefläche 4 führen, welche die Bedienung der Einrichtung 1 ermöglicht. Ein Nutzer kann die Einrichtung 1 mittels der berührungsempfindlichen Oberfläche der Anzeigefläche 4 bedienen. Die Berührung oder die Berührungen der berührungsempfindlichen Anzeigefläche 4 werden von der Steuervorrichtung 2 erfasst und in Abhängigkeit von der aktuellen Anzeige auf der Anzeigefläche 4 in Daten umgesetzt, welche der Steuerung der Einrichtung 1 dienen.

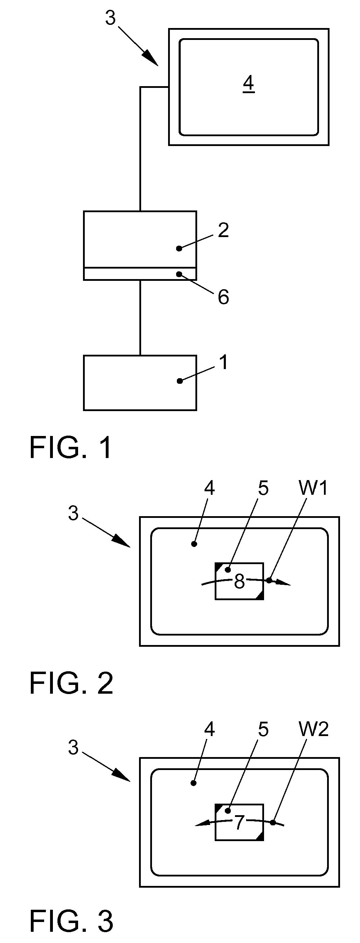

Im Folgenden wird ein Bedienvorgang zum Verändern eines Einstellparameters der Einrichtung 1 mit Bezug zu den Fig. 2 bis 4 erläutert:
Zum Verändern des Einstellparameters wird auf der Anzeigefläche 4 eine Schaltfläche 5 angezeigt. Diese Schaltfläche 5 nimmt einen bestimmten Bereich der Anzeigefläche 4 ein. Des Weiteren wird bevorzugt innerhalb der Schaltfläche 5 auch der aktuelle Wert des Einstellparameters angezeigt.

Um den Einstellparameter zu verändern, führt der Nutzer auf der berührungsempfindlichen Anzeigefläche 4 eine Wischgeste aus. Unter einer Wischgeste wird in Verbindung mit der Bedienung einer berührungsempfindlichen Anzeigefläche 4 im Folgenden verstanden, dass der Nutzer die Anzeigefläche 4 bei einer bestimmten Position berührt, danach mit einer bestimmten Bewegung über die Anzeigefläche 4 streicht, wobei die Anzeigefläche 4 fortwährend berührt wird und sich die Position der Berührung verändert, bis schließlich zum Abschluss der Wischgeste die Anzeigefläche 4 nicht mehr berührt wird, d. h. das Objekt, mit dem die Wischgeste ausgeführt wurde, von der Anzeigefläche 4 entfernt wird. Bei dem Objekt kann es sich um einen Gegenstand handeln, mit welchem man die Anzeigefläche 4 in einem begrenzten Bereich berühren kann. Bei dem Objekt kann es sich jedoch auch um die Fingerspitze des Nutzers handeln, welche über die Anzeigefläche 4 in einer Wischgeste geführt wird.

Die Bewegung der Wischgeste zeichnet sich dadurch aus, dass ihr eine bestimmte Richtung zugeordnet werden kann. Sie kann auf einer geraden Linie verlaufen, sie weist jedoch insbesondere eine bestimmte Krümmung auf. Trajektorien, die einer Wischgeste zugeordnet werden sollen, können in der Steuervorrichtung 2 vorab definiert werden. Beispielsweise kann eine minimale und eine maximale Länge der Trajektorie und eine maximale Krümmung der Trajektorie definiert sein.

Die Wischgeste, mit welcher der Einstellparameter, welchem die Schaltfläche 5 zugeordnet ist, verändert werden kann, zeichnet sich dadurch aus, dass die Wischgeste nacheinander sowohl in dem von der Schaltfläche 5 eingenommenen Bereich der Anzeigefläche 4 als auch in einem außerhalb des von der Schaltfläche 5 eingenommenen Bereichs der Anzeigefläche 4, ausgeführt wird. In Fig. 2 ist ein erstes Beispiel für eine Wischgeste W1 gezeigt. Bei dieser Wischgeste W1 wird z. B. der Finger des Nutzers links von der Schaltfläche 5 auf die Anzeigefläche 4 aufgesetzt, dann auf der Anzeigefläche 4 über die Schaltfläche 5 gestrichen und die Wischgeste endet schließlich in einem Bereich rechts neben der Schaltfläche 5, außerhalb dem von der Schaltfläche 5 eingenommenen Bereich der Anzeigefläche 4. Durch die Wischgeste W1 wird somit die Schaltfläche 5 von links nach rechts durchgestrichen. Diese Wischgeste W1 kann von der Steuervorrichtung 2 so interpretiert werden, dass der Einstellparameter um eine Stufe erhöht werden soll. Entsprechende Daten werden nach dem Erfassen der Wischgeste W1 von der Steuervorrichtung 2 erzeugt und über die Schnittstelle 6 an die Einrichtung 1 übertragen. In der Einrichtung 1 wird daraufhin der Einstellparameter entsprechend verändert. Diese Veränderung wird dann mittels der Steuervorrichtung 2 in der Schaltfläche 5 von der Anzeigefläche 4 angezeigt.

In Fig. 3 ist ein Beispiel für eine Wischgeste W2 gezeigt, mit welcher der Wert des Einstellparameters der Einrichtung 1 um eine Stufe erniedrigt werden kann. Bei der Wischgeste W2 streicht der Nutzer z. B. mit seiner Fingerspitze die Schaltfläche 5 von rechts nach links durch. Die Veränderung des Einstellparameters ist bei den Beispielen der Fig. 2 und 3 somit von der Bewegungsrichtung beim Ausführen der Wischgeste W1 bzw. W2 abhängig.

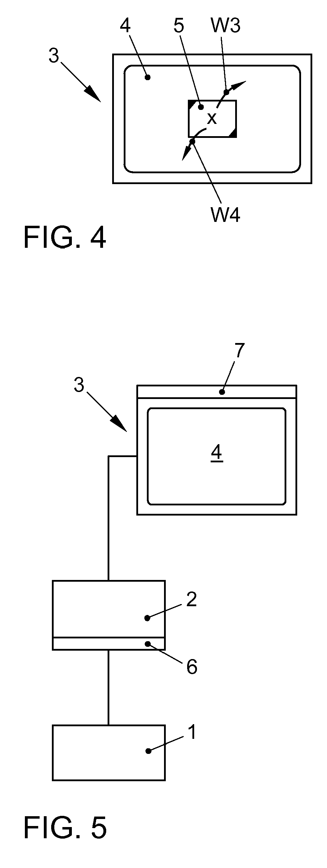

In Fig. 4 sind weitere Möglichkeiten für Wischgesten W3 und W4 dargestellt. In diesem Fall handelt es sich bei dem Einstellparameter nicht um einen numerischen Wert, sondern um einen logischen Wert, welcher zu bestimmten Veränderungen der Einrichtung 1 bzw. der graphischen Benutzeroberfläche, die mit der Einrichtung 1 in Verbindung steht, führt. Bei der Wischgeste W3 wird die Anzeigefläche 4 zunächst in dem von der Schaltfläche 5 eingenommenen Bereich der Anzeigefläche 4 berührt. Danach wird die Berührung in einen Bereich außerhalb des von der Schaltfläche 5 eingenommenen Bereichs auf der Anzeigefläche 4 geführt und dort wird die Berührung der Anzeigefläche 4 gelöst. lich eine Bewegung nach oben bzw. nach rechts oben. Diese Wischgeste W3 kann von der Steuervorrichtung 2 so interpretiert werden, dass ein graphisches Objekt, wie z. B. die Schaltfläche 5 geschlossen werden soll.

Des Weiteren kann eine Wischgeste W4 definiert sein, bei welcher eine von der Schaltfläche 5 ausgehende Streichbewegung nach unten bzw. nach links unten ausgeführt wird. Diese Wischgeste 4 kann beispielsweise als Verkleinern eines graphischen Objekts von der Steuervorrichtung 2 interpretiert werden.

Die Wischgesten W1 bis W4 können auch in Verbindung mit derselben Schaltfläche 5 eingesetzt werden, da sie unterscheidbar sind. Bei den Wischgesten W1 und W2 wird die Schaltfläche 5 in verschiedenen Richtungen durchgestrichen, bei den Wischgesten W3 und W4 wird eine von der Schaltfläche 5 ausgehende Streichbewegung in verschiedenen Richtungen ausgeführt.

Mit Bezug zu Fig. 5 wird ein weiteres Ausführungsbeispiel der erfindungsgemäßen Vorrichtung bzw. des erfindungsgemäßen Verfahrens erläutert:
Das Ausführungsbeispiel der Fig. 5 unterscheidet sich von dem vorstehend beschriebenen Ausführungsbeispiel der Fig. 1 darin, dass als Eingabeeinrichtung anstatt einer berührungsempfindlichen Oberfläche der Anzeigefläche 4 eine Einrichtung 7 zum Erfassen einer Geste vorgesehen ist, die vor der Anzeigefläche 4 ausgeführt wird, ohne dass es erforderlich ist, dass die Anzeigefläche 4 berührt wird. Beispielsweise kann die Hand oder der Finger eines Nutzers vor der Anzeigefläche 4 die Geste ausführen. Von der Erfassungseinrichtung 7 wird dabei die dreidimensionale Position der Hand in einem bestimmten Aufenthaltsbereich vor der Anzeigefläche 4 erfasst. Der zugelassene Aufenthaltsbereich hängt von der Anordnung der Anzeigefläche 4 in dem Fahrzeug ab. Der Bereich sollte so gewählt sein, dass der Aufenthalt der Hand eines Nutzers, in diesem Aufenthaltsbereich eindeutig mit einer Bedienung der Erfassungseinrichtung 7 in Verbindung gebracht werden kann. Die Grenze des Aufenthaltsbereichs kann z. B. 40 cm bis 10 cm vor der Anzeigefläche 4 liegen. Wird die Hand des Nutzers näher als dieser Schwellwert an die Anzeigefläche 4 heranbewegt, wird dies von der Erfassungseinrichtung 7 erkannt und die Annäherung wird als Bedienabsicht interpretiert. Die Erfassungseinrichtung 7 detektiert die Position und die Bewegung der Hand des Nutzers in dem Aufenthaltsbereich. Dabei werden verschiedene, von der Hand ausgeführte Gesten erkannt und als Eingaben interpretiert.

Die Erfassungseinrichtung 7 kann z. B. Infrarotlichtquellen und Infrarotlichtempfänger umfassen, welche das an der Hand reflektierte Infrarotlicht detektieren. Details einer solchen Erfassungseinrichtung sind in der DE 100 58 244 C2 beschrieben, deren diesbezüglicher Offenbarungsgehalt hiermit in die vorliegende Beschreibung aufgenommen wird. Weitere Erfassungseinrichtungen, die in Verbindung mit der Anzeigevorrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine Licht emittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere Licht emittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu null ergänzt. Ändert sich die Position des Objekts, ändert sich auch der Lichtanteil, welcher von der ersten Licht emittierenden Diode zur Fotodiode über die Reflexion an dem Objekt gelangt. Dies bewirkt ein Nachführen der Intensität der zweiten Licht emittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Für die Gesten, die in Verbindung mit der Erfassungseinrichtung 7 ausgeführt werden können, wird ein Raumbereich gebildet, welcher sich von der Schaltfläche 5 senkrecht bis zu der Grenze des erfassten Aufenthaltsbereichs erstreckt. Der Raumbereich vor der Schaltfläche 5 entspricht in diesem Fall dem von der Schaltfläche 5 eingenommenen Bereich der Anzeigefläche 4. Der Raum außerhalb dieses Raums entspricht dem Bereich außerhalb des von der Schaltfläche 5 eingenommenen Bereichs der Anzeigefläche 4.

Bei der Wischgeste W1 durchstreicht der Nutzer somit beispielsweise mit seinem Finger den Raumbereich vor der Schaltfläche 5 von links nach rechts, bei der Wischgeste W2 durchstreicht er diesen Bereich von rechts nach links. Analog tritt bei der Wischgeste W3 der Nutzer in den erfassten Aufenthaltsbereich vor der Schaltfläche 5 ein und bewegt sich dann nach oben bzw. nach rechts oben aus dem Bereich heraus. Entsprechend bewegt sich der Nutzer bei der Wischgeste W4 aus diesem Bereich nach unten bzw. nach links unten aus diesem Bereich heraus.

Gemäß einer Ausgestaltung der beschriebenen Ausführungsbeispiele hängt die Veränderung der Einstellparameters alternativ oder zusätzlich von der Bewegungsgeschwindigkeit beim Ausführen der Wischgeste ab. Das Maß, um welches z. B. ein numerische Wert des Einstellparameters verändert wird, kann z. B. von der Bewegungsgeschwindigkeit beim Ausführen der Wischgeste abhängen. Hierfür können die möglichen Geschwindigkeiten, die beim Ausführen der Wischgeste auftreten können, in verschiedene Bereiche eingeteilt werden. Das Maß, um welches der numerische Wert des Einstellparameters verändert wird, hängt in diesem Fall davon ab, in welchen Bereich die Bewegungsgeschwindigkeit fällt.

### BEZUGSZEICHENLISTE

- 1: Einrichtung
- 2: Steuervorrichtung
- 3: Anzeigevorrichtung
- 4: Anzeigefläche
- 5: Schaltfläche
- 6: Schnittstelle
- 7: Erfassungseinrichtung
- W1 bis W4: Wischgesten

## Patentansprüche

1. Verfahren zum Bedienen einer Einrichtung (1), der ein Einstellparameter zugeordnet ist, bei dem
- auf einer Anzeigefläche (4) eine Schaltfläche (5) zum Verändern des Einstellparameters angezeigt wird und
- der Einstellparameter durch eine auf oder vor der Anzeigefläche (4) ausgeführte Wischgeste (W1-W2) verändert wird, wobei die Wischgeste (W1-W2) zunächst in oder vor einem Bereich außerhalb des von der Schaltfläche (5) eingenommenen Bereichs, danach in oder vor einem von der Schaltfläche (5) eingenommenen Bereich und schließlich in oder vor einem Bereich außerhalb des von der Schaltfläche (5) eingenommenen Bereichs ausgeführt wird.

2. Verfahren nach Anspruch 1,
**dadurch gekennzeichnet,**
**dass** die Anzeigefläche (4) berührungsempfindlich ist und bei der Wischgeste (W1-W2) die berührungsempfindliche Anzeigefläche (4) fortwährend berührt wird.

3. Verfahren nach Anspruch 1 oder 2,
**dadurch gekennzeichnet,**
**dass** die Veränderung des Einstellparameters von der Bewegungsrichtung und/oder der Bewegungsgeschwindigkeit beim Ausführen der Wischgeste (W1-W2) abhängt.

4. Verfahren nach einem der Ansprüche 1 bis 3,
**dadurch gekennzeichnet,**
**dass** dem Einstellparameter ein numerischer Wert zugeordnet ist und dass der numerische Wert durch die Wischgeste (W1-W2) herauf- oder heruntergesetzt wird.

5. Verfahren nach einem der Ansprüche 1 bis 3,
**dadurch gekennzeichnet,**
**dass** dem Einstellparameter ein logischer Wert zugeordnet ist und dass der logische Wert durch die Wischgeste (W1-W2) verändert wird.

6. Verfahren nach einem der vorstehenden Ansprüche,
**dadurch gekennzeichnet,**
**dass** die Einrichtung (1) eine Fahrzeugeinrichtung ist und die Anzeigefläche (4) im Innenraum eines Fahrzeugs angeordnet ist.

7. Vorrichtung zum Bedienen einer Einrichtung (1), der ein Einstellparameter zugeordnet ist, mit
- einer Anzeigevorrichtung (3) mit einer Anzeigefläche (4) zum Anzeigen einer Schaltfläche (5) zum Verändern des Einstellparameters der Einrichtung (1) und
- einer Steuervorrichtung (2), die mit der Anzeigevorrichtung (3) gekoppelt ist, und die eine Schnittstelle (6) zu der zu bedienenden Einrichtung (1) aufweist,
**dadurch gekennzeichnet, dass**
- mittels der Steuervorrichtung (2) eine auf oder vor der Anzeigefläche (4) ausgeführte Wischgeste (W1-W2) erfassbar ist, wobei die Wischgeste (W1-W2) zunächst in oder vor einem Bereich außerhalb des von der Schaltfläche (5) eingenommenen Bereichs, danach in oder vor einem von der Schaltfläche eingenommenen Bereich und schließlich in oder vor einem Bereich außerhalb des von der Schaltfläche (5) eingenommenen Bereichs ausgeführt wird, und Daten zum Verändern des Einstellparameters in Abhängigkeit von der erfassten Wischgeste (W1-W2) erzeugbar sind.

8. Vorrichtung nach Anspruch 7,
**dadurch gekennzeichnet,**
**dass** die Anzeigefläche (4) berührungsempfindlich ist.

9. Vorrichtung nach Anspruch 7 oder 8,
**dadurch gekennzeichnet,**
**dass** mittels der Steuervorrichtung (2) die Bewegungsrichtung beim Ausführen der Wischgeste (W1-W2) erfassbar ist und die Veränderung des Einstellparameters von der Bewegungsrichtung beim Ausführen der Wischgeste (W1-W2) abhängt.

10. Vorrichtung zum Bedienen einer Fahrzeugeinrichtung, umfassend eine Vorrichtung nach einem der Ansprüche 7 bis 9, wobei die Anzeigefläche (4) im Innenraum eines Fahrzeugs angeordnet ist.

11. Vorrichtung nach Anspruch 10,
**dadurch gekennzeichnet,**
**dass** die Fahrzeugeinrichtung eine Klimaanlage oder eine Einrichtung zum Wiedergeben von Multimediadaten ist.

12. Vorrichtung nach Anspruch 10 oder 11,
**dadurch gekennzeichnet,**
**dass** die Vorrichtung eine Einrichtung (7) zum Erfassen der Position eines Objekts vor der Anzeigefläche (4) aufweist.

## Claims

1. Method for operating a device (1) to which an adjustment parameter is assigned, in which method
- a control button (5) for changing the adjustment parameter is displayed on a display surface (4), and
- the adjustment parameter is changed by a wiping gesture (W1-W2) carried out on or in front of the display surface (4), wherein the wiping gesture (W1-W2) is firstly carried out in or in front of a region outside the region taken up by the control button (5), and then in or in front of a region taken up by the control button (5) and finally in or in front of a region outside the region taken up by the control button (5).

2. Method according to Claim 1,
**characterized**
**in that** the display surface (4) is touch-sensitive, and during the wiping gesture (W1-W2) the touch-sensitive display surface (4) is continuously touched.

3. Method according to Claim 1 or 2,
**characterized**
**in that** the changing of the adjustment parameter depends on the direction of movement and/or the speed of movement when the gesture (W1-W2) is carried out.

4. Method according to Claim 1 or 3,
**characterized**
**in that** the adjustment parameter is assigned a numerical value, and in that the numerical value is increased or decreased by means of the wiping gesture (W1-W2).

5. Method according to one of Claims 1 to 3,
**characterized**
**in that** the adjustment parameter is assigned a logic value, and in that the logic value is changed by the wiping gesture (W1-W2).

6. Method according to one of the preceding claims,
**characterized**
**in that** the device (1) is a vehicle device, and the display surface (4) is arranged in the passenger compartment of a vehicle.

7. Apparatus for operating a device (1) which is assigned an adjustment parameter, having
- a display apparatus (3) having a display surface (4) for displaying a control button (5) for changing the adjustment parameter of the device (1)
and
- a control apparatus (2) which is coupled to the display apparatus (3) and which has an interface (6) with the device (1) to be operated,
**characterized in that**
- a wiping gesture (W1-W2) which is carried out on or in front of the display surface (4) can be sensed by means of the control apparatus (2), wherein the wiping gesture (W1-W2) is firstly carried out in or in front of a region outside the region which is taken up by the control button (5), and then in or in front of a region taken up by the control button and finally in or in front of a region outside the region taken up by the control button (5), and data relating to the changing of the adjustment parameter can be generated as a function of the sensed wiping gesture (W1-W2).

8. Apparatus according to Claim 7,
**characterized**
**in that** the display surface (4) is touch-sensitive.

9. Apparatus according to Claim 7 or 8,
**characterized**
**in that** the direction of movement during the execution of the wiping gesture (W1-W2) can be sensed by means of the control apparatus (2), and the changing of the adjustment parameter depends on the direction of movement during the execution of the wiping gesture (W1-W2).

10. Apparatus for operating a vehicle device, comprising an apparatus according to one of Claims 7 to 9, wherein the display surface (4) is arranged in the passenger compartment of a vehicle.

11. Apparatus according to Claim 10,
**characterized**
**in that** the vehicle device is an air-conditioning system or a device for playing back multimedia data.

12. Apparatus according to Claim 10 or 11,
**characterized**
**in that** the apparatus has a device (7) for sensing the position of an object in front of the display surface (4).

## Revendications

1. Procédé de commande d'un système (1) auquel est associé un paramètre de réglage, lors duquel
- sur une surface d'affichage (4) s'affiche une surface de commutation (5) destinée à modifier le paramètre de réglage et
- le paramètre de réglage est modifié par un geste d'essuyage (W1-W2) réalisé sur ou à l'avant de la surface d'affichage (4), le geste d'essuyage (W1-W2) étant réalisé d'abord dans ou à l'avant d'une zone à l'extérieur de la zone occupée par la surface de commutation (5), ensuite dans ou à l'avant d'une zone occupée par la surface de commutation (5) et pour finir dans ou à l'avant d'une zone à l'extérieur de la zone occupée par la surface de commutation (5).

2. Procédé selon la revendication 1,
**caractérisé en ce que**
la surface d'affichage (4) est tactile et lors du geste d'essuyage (W1-W2), on touche perpétuellement la surface d'affichage (4) tactile.

3. Procédé selon la revendication 1 ou la revendication 2,
**caractérisé en ce que**
la modification du paramètre de réglage dépend de la direction de déplacement et/ou de la vitesse de déplacement lors de la réalisation du geste d'essuyage (W1-W2).

4. Procédé selon l'une quelconque des revendications 1 à 3,
**caractérisé en ce qu'**au paramètre de réglage est affectée une valeur numérique et **en ce que** la valeur numérique est incrémentée ou décrémentée par le geste d'essuyage (W1-W2).

5. Procédé selon l'une quelconque des revendications 1 à 3,
**caractérisé en ce qu'**au paramètre de réglage est affectée une valeur logique et **en ce que** la valeur logique est modifiée par le geste d'essuyage (W1-W2).

6. Procédé selon l'une quelconque des revendications précédentes,
**caractérisé en ce que** le système (1) est un système dans un véhicule et **en ce que** la surface d'affichage (4) est placée dans l'habitacle d'un véhicule.

7. Dispositif destiné à commander un système (1) auquel est affecté un paramètre de réglage, avec
- un dispositif d'affichage (3) avec une surface d'affichage (4) destinée à afficher une surface de commutation (5) pour modifier le paramètre de réglage du système (1)
et
- un dispositif de commande (2) qui est couplé avec le dispositif d'affichage (3) et qui comporte une interface (6) vers le système (1) à commander,
**caractérisé en ce**
- **qu'**au moyen du dispositif de commande (2), un geste d'essuyage (W1-W2) réalisé sur ou à l'avant de la surface d'affichage (4) peut être détecté, le geste d'essuyage (W1-W2) étant réalisé d'abord dans ou à l'avant d'une zone à l'extérieur de la zone occupée par la surface de commutation (5), ensuite dans ou à l'avant d'une zone occupée par la surface de commutation et pour finir dans ou à l'avant d'une zone à l'extérieur de la zone occupée par la surface de commutation (5) et des données destinées à modifier le paramètre de réglage peuvent être générées en fonction du geste d'essuyage (W1-W2) détecté.

8. Dispositif selon la revendication 7,
**caractérisé en ce que** la surface d'affichage (4) est tactile.

9. Dispositif selon la revendication 7 ou la revendication 8,
**caractérisé en ce**
**qu'**au moyen du dispositif de commande (2), la direction de déplacement lors de la réalisation du geste d'essuyage (W1-W2) peut être détectée et la modification du paramètre de réglage dépend de la direction de déplacement lors de la réalisation du geste d'essuyage (W1-W2).

10. Dispositif de commande d'un système dans un véhicule, comprenant un dispositif selon l'une quelconque des revendications 7 à 9, la surface d'affichage (4) étant placée dans un habitacle du véhicule.

11. Dispositif selon la revendication 10,
**caractérisé en ce que** le système dans le véhicule est une climatisation ou un système destiné à reproduire des données multimédia.

12. Dispositif selon la revendication 10 ou la revendication 11,
**caractérisé en ce que** le dispositif comporte un système (7) de détection de la position d'un objet à l'avant de la surface d'affichage (4).
